# EUROPEAN PATENT APPLICATION

(11) **EP 3 715 710 A1**
(43) Date of publication of application: **30.09.2020**
(21) Application number: 20170736.1
(22) Date of filing: 03.12.2015
(51) Int. Cl.: F21V 17/00, F21V 33/00, F21V 23/06, F21Y 115/10, F21S 8/02

(54) **A MODULAR ILLUMINATION APPARATUS**

(30) Priority: 04.12.2014 GB 201421557
(62) Divisional of application: 15821153.2
(71) Applicant: Sleep Safe Systems Ltd, Newbury, Berkshire RG19 6HW (GB)
(72) Inventor: WARD, Robert, Newbury, Berkshire RG19 6HW (GB)
(74) Representative: Beck Greener LLP

(57) **Abstract**

There is provided herein a modular illumination apparatus, comprising a housing; at last one first opening defined in the housing for receiving an illumination means or for emitting light from an illumination means therethrough; and at least one second opening defined in a surface of the housing for receiving at least one of a number of possible functional components; wherein the interior of the housing is configured to be capable of receiving different functional components, thereby allowing the functional component or components located in the second opening to be interchangeable.

## Description

This invention relates to a modular illumination apparatus.

It is often the case that a light or illumination apparatus is used in a particular locality in combination with at least one other functional component. Conventionally, the light and other functional component have been provided in separate unit housings and arranged either adjacent to each other or a spaced distance apart from each other in the locality in question. However, the provision of two or more unit housings within a particular locality, such as for example, on a ceiling of a room in a building, can make the locality appear cluttered and can be aesthetically displeasing. This is particularly the case when a user may require a number of different functional components to be provided in a particular locality, such as for example, a light, a fire sprinkler system, a smoke detector and/or the like.

In an attempt to overcome the abovementioned problem, it is known to provide a light or illumination apparatus in combination with other functional components in a single unit housing. For example, KR20110080275 discloses a single ceiling mounted unit including four functional components; namely an illumination component, a fire sprinkler component, a fire detection component and an air conditioning vent. Each functional component has a different shape and dimensioned aperture defined in a front surface of the housing for location of the functional component. Thus, the resulting unit covers a relatively large surface area, the electrical wiring for the same is plentiful and complex, and different units would need to be provided for different combinations of functional components that a user may wish to combine. If some of the functional components were not required, a gap would be left in the front surface of the housing which would be aesthetically displeasing.

It is therefore an aim of the present invention to provide modular illumination apparatus that overcomes the abovementioned problems. It is a further aim of the present invention to provide a method of using modular illumination apparatus that overcomes the abovementioned problems.

According to the present invention, there is provided a modular illumination apparatus, comprising a housing; at last one first opening defined in the housing for receiving an illumination means or for emitting light from an illumination means therethrough; and at least one second opening defined in a surface of the housing for receiving at least one of a number of possible functional components; wherein the interior of the housing is configured to be capable of receiving different functional components, thereby allowing the functional component or components located in the second opening to be interchangeable.

Thus, the modular illumination apparatus of the present invention has the advantage that a single universal housing can be used for the provision of illumination or light in combination with at least one of a number of possible and different functional components. This removes the requirement for different housing units to be provided for each different light and functional component combination.

In embodiments, the housing includes two or more electrical connection means or points provided in or associated with the second opening, each or one or more of the electrical connection means or points being configured to allow electrical connection, if required, with a different functional component or components. In some of these embodiments, each or at least one of the two or more electrical connection means or points are provided a different distance from the surface defining the second opening, are provided in a different spatial position relative to a particular point on the surface defining said second opening, and/or are a different size and/or shape, thereby providing a unique or different electrical connection or electrical connection position for at least one of the number of different possible functional components in use. Alternatively or additionally, the two or more electrical connection means or points are arranged in a spaced apart manner along a surface of the housing that is perpendicular, substantially perpendicular, and/or transverse to the face or surface in which at least the second opening is defined.

In embodiments, the one or more functional components that can be used with the apparatus include any or any combination of a fire sprinkler means or mechanism, a fire mist means or mechanism, speaker means or mechanism, smoke detection means or mechanism, further illumination means or mechanism, or a camera means or mechanism.

In embodiments, the housing includes a sleeve member or a recess portion, and the second opening is defined at a first end of the sleeve member or recess portion. In some of these embodiments, the sleeve member or recess portion is provided with location means or one or more location members to allow a functional component to locate with the same in use. In some of these embodiments, the functional component, or at least one intermediate housing with which the functional component locates in use, is provided with complementary or substantially complementary location means or one or more location members to allow location and/or engagement with the location means or members on the sleeve member or recess portion.

In embodiments, the apparatus further comprises engagement means provided on or associated with the housing and configured to allow the apparatus to be fitted to or in a wall surface. In embodiments, the illumination means has any or any combination of the following: rated at IP65, provides a main source or sole source of illumination in a locality in which the apparatus is fitted, provides emergency lighting in a locality in which the apparatus is fitted, includes one or more light emitting diodes, is arranged to provide different coloured lighting, provides two or more different possible light sequences, allows light to be emitted for different time periods or at different times or allows the brightness of the light to be adjusted. In embodiments, the apparatus further comprises digital multiplex control means configured to allow a user to control the illumination means and/or one or more light emitting diodes forming part of the illumination means. In embodiments, power supply means or a power supply is provided in, connectable to, and/or associated with the apparatus to power the illumination means and/or the functional component. In embodiments, one or more reflectors are provided on or associated with the illumination means and/or apparatus to reflect light emitted from the illumination means.

There is also disclosed herein modular illumination apparatus, said modular illumination apparatus including a housing, a first opening or first set of openings defined in the housing for the location of illumination means or for emitting light from illumination means therethrough in use, and at least a second opening defined in a surface of the housing for the location of at least one of a number of possible functional components in use, and wherein said housing includes two or more electrical connection means or points provided in or associated with said second opening, each or one or more of the electrical connection means or points allowing electrical connection, if required, with a different functional component or components in use, thereby allowing the functional component or components located in the second opening to be interchangeable.

Preferably each or at least one of the two or more electrical connection means or points are provided a different distance from the surface defining said second opening, are provided in a different spatial position relative to a particular point on the surface defining said second opening and/or are a different size and/or shape. This can provide a unique or different electrical connection or electrical connection position for at least one of the number of different possible functional components in use.

In one example, the one or more functional components that could be used with the apparatus include any or any combination of: fire sprinkler means or mechanism; fire mist means or mechanism; speaker means or mechanism; carbon monoxide sensing means or mechanism; smoke detection means or mechanism; further illumination means or mechanism; camera means or mechanism and/or the like.

A fire sprinkler means or mechanism is typically a device or head which is connected to a water supply in use. The fire sprinkler means can be used alone or form part of a fire sprinkler system comprising a plurality of fire sprinkler heads. If a sprinkler head detects sufficient heat in a particular locality, a bulb within the sprinkler head is activated and water from the water supply is released through the sprinkler head to help suppress any fire that may be associated with the source of detected heat.

A fire mist means or mechanism is typically a device or head which is connected to a water supply in use. The fire mist means or mechanism can be used alone or form part of a fire mist system comprising a plurality of fire mist heads. If a mist head detects sufficient heat in a particular locality, a bulb within the mist head is activated and a heat absorbent vapour is created that provides a larger total surface area of water exposed to a possible than for a fire sprinkler head.

A speaker means or mechanism is typically any device which allows one or more audio signals to be transmitted from the same in use.

A carbon monoxide sensing means or mechanism is typically any device which allows a pre-determined threshold value of carbon monoxide gas to be detected in use. The carbon monoxide sensing means is typically associated with a visual and/or audible alarm if the pre-determined threshold value of carbon monoxide gas is detected in the locality of the device.

A smoke detection means or mechanism is typically any device which allows a pre-determined threshold of smoke to be detected in use. The smoke detection means is typically associated with a visual and/or audible alarm if a pre-determined threshold of smoke is detected in the locality of the device.

A camera means or mechanism is typically any device which allows one or more images or image data to be recorded in use.

The first opening, first set of openings and/or the at least second opening can include any or any combination of one or more openings, apertures, recesses and/or the like.

The functional component that can be located in or with the at least second opening in use can be an electrically powered functional component, an electronic functional component and/or can be a non-electrically powered functional component. In the latter case, the non-powered functional component can locate in the second opening but does not require electrical connection with the two or more electrical connection means or points in use.

In one example, the functional component or components located in the second aperture utilise one or more of the electrical connection means or points in use. In one example, a functional component can be located in the second aperture that does not utilise the electrical connection means or points in use. In this latter example one or more or all the electrical connection means or points of the apparatus can be removed and/or isolated. For example, a first mist head may be fitted in the second aperture that does not require an electrical connection to be made. Preferably the functional component provides the apparatus with a different functionality to the illumination function of the apparatus.

In one example the first opening or first set of openings is/are defined in the same face or surface of the housing as the second opening or second set of openings. Preferably the first and second openings are defined in a front face or surface of the housing, and/or a surface of the housing which is visible to a user when the apparatus is fitted to a wall surface in use.

Preferably only a single functional component is located or locatable in or with the second opening of the apparatus at any one time (in addition to the illumination means). Thus, in one example, the modular illumination apparatus can perform a dual function of illumination plus one other function. In one example, the single functional component can perform or be capable for performing more than one function.

Preferably the plurality of possible and different functional components that can fit with the apparatus are typically shaped and/or dimensioned such that any one of them can fit in the second aperture in use at any one time.

Preferably the two or more electrical connection means or points are arranged in a spaced apart manner along a surface of the housing that is perpendicular, substantially perpendicular and/or transverse to the face or surface in which at least the second opening is defined, and further preferably to the face or surface in which both the first opening or first set of openings and the at least second opening is defined.

In one example, the housing includes a sleeve member or a recess portion and the second opening is defined at a first end of the sleeve member or recess portion.

The sleeve member or recess portion preferably protrudes rearwardly or outwardly from the surface of the housing in which the first and/or second openings are defined. The sleeve member can be any member in which a channel or hollow cavity is defined therein.

Preferably the two or more spaced apart electrical connection means or points are arranged a spaced distance along and/or around a side wall of the sleeve member or recess portion.

Preferably the sleeve member or recess portion includes a second end. The second end can be a blind end or can have a further opening defined therein. The second end of the sleeve member or recess portion is preferably opposite or substantially opposite the first end of the sleeve member or recess portion.

Preferably the two or more electrical connection means or points are arranged a spaced distance apart along the length of the sleeve member or recess portion between the first and second ends of the same.

In one example, at least one, and preferably two or more, of the electrical connection means or points defined in the housing, sleeve member or recess portion are in the form of electrical sockets. In one example, the sleeve member or recess portion is provided with location means or one or more locations members to allow a functional component to locate with the same in use. In one example, the functional component includes complementary or substantially complementary location means or location members to allow location and/or engagement with the location means or members of the sleeve member or recess portion in use.

In one example, at least one intermediate housing is provided, the functional component can locate with the at least one intermediate housing and the at least one intermediate housing can locate with the main housing. Location means or location members can be provided on the at least one intermediate housing and/or the functional component to allow location and/or engagement between the same and/or the location means or members of the sleeve member or recess portion of the main housing. Preferably the location means or members are complementary or substantially complementary to the location means or members of the sleeve member or recess portion.

The location means or one or more location members can include any or any combination of one or more protrusion members and/or recesses. Preferably the two or more spaced apart electrical connection means or points are associated with or provided on the location means or one or more location members. In a preferred example, the sleeve member or recess portion includes at least one protrusion member, and preferably two or more protrusion members, that protrude inwardly of the sleeve member or recess portion into a hollow interior or channel defined therein. Preferably the two or more spaced apart electrical connection means or points are defined in the one or more protrusion members.

Preferably one or more electrical connection means or points are provided on the functional component and/or the at least one intermediate housing that are complementary or substantially complementary in form to at least one of the two or more spaced apart electrical connection means or points. This allows an electrical connection to be formed between one of the two or more spaced apart electrical connection means or points on the main housing body, the intermediate housing and/or the functional component in use.

In one example, the functional component and/or the at least one intermediate housing include one or more electrical pins. The pins can electrically engage with one or more electrical sockets defined in the main housing.

Preferably the one or more electrical pins and/or the one or more electrical connection means or points on the functional component and/or intermediate housing have resilient biasing means associated with the same. Preferably the resilient biasing means are arranged to bias the electrical pins outwardly of the intermediate housing and/or the functional component body. Preferably the resilient biasing means include one or more springs and/or sprung material. Preferably the one or more electrical pins are provided on at least an exterior or outer surface of the functional component body and/or intermediate housing.

In one example, the intermediate housing is in the form of a further sleeve member, channel member or recess portion. Preferably the one or more electrical pins are provided on at least an exterior or outer surface of the further sleeve member or recess portion and protrude outwardly thereof.

In one example, one end of the electrical pin protrudes outwardly from an outer surface of the intermediate housing and/or functional component body and one end of the electrical pin protrudes inwardly or is located on an inner surface of the intermediate housing and/or functional component body so as to make electrical contact with electrical circuitry within the functional component body in use.

In one example, a different intermediate housing is provided for each or two or more different functional component that can be used with the housing. This allows each different housing to have an electrical connection position unique to at least one functional component, and preferably two or more functional components. Thus, in one example, there are two or more intermediate housings provided for use with two or more different functional components that can be used with the apparatus of the present invention.

In one example, the intermediate housing or an inner surface of the at least one intermediate housing includes one or more location means or members. Complementary or substantially complementary location means or members are provided on the functional component, or an outer surface of each or two or more different functional component body to allow location and/or engagement between the location means or members of the intermediate housing and the location means or members of the functional component.

In one example, two or more different groups or sets of location means or members are provided on the intermediate housing or inner surface of the intermediate housing, each group or set corresponding to a different functional component that can be located with the same in use. This allows a more universal intermediate member to be provided where only the size, shape and/or position of the electrical connection means or point on the intermediate member differ between different intermediate housings. Each different group or set can include one or more location means or members.

Preferably visual indication means, and typically different visual indication means, are provided on or associated with the two or more different groups or sets of location means or members on the intermediate housing to allow a user to determine which location means or members should be engaged with which different functional component.

The visual indication means can include one or more different colours, wording, numbers, symbols, patterns and/or the like.

In one example, the two or more different groups or sets of location means or members provided on the intermediate housing have different dimensions, shape and/or design to allow a user to determine which of the location means or members should be located with which functional component in use.

Preferably the one or more location means or members provided on the intermediate housing is one of a protrusion member or a recess, and the one or more location means or members provided on the functional component body is the other of a protrusion member or recess.

In one example, engagement means are provided on or associated with the main housing of the apparatus to allow the apparatus to be fitted to or in a wall surface in use.

The engagement means can include any or any combination of one or more spring clips, clips, screws, nuts and bolts, friction fit, ties, inter-engaging members and/or the like.

In one example, the illumination means incorporated in the apparatus in use is typically rated at IP65, particularly if the illumination apparatus is being combined with a functional component in the form of a fire sprinkler or fire mist head, thereby providing limited ingress of water and zero ingress of dust into the apparatus.

The illumination means can be arranged to provide lighting at any specified time, such as for example, all the time, whenever it is in an "on" condition, whenever the apparatus is moved from a non-activated condition to an activated condition, it can provide the main or sole source of illumination in the locality in which the apparatus is located and/or it can be used to provide emergency lighting in the locality in which the apparatus is fitted in use.

The term emergency lighting is typically lighting that is provided for an emergency situation when a main power supply is cut and normal illumination systems might fail. Emergency lighting is normally required to operate fully automatically and provide illumination of a sufficiently high level to enable all occupants to evacuate the premises/locality safely.

The illumination means can include any means which can provide illumination and/or emit light therefrom when in an "on" or "activated" condition. Preferably the illumination means are in the form of one or more Light Emitting Diodes (LEDs).

Preferably a plurality of LEDs and/or illumination means are provided on or associated with the apparatus.

The LEDs and/or illumination means can generate light of the same colour and/or different colours at the same time and/or at different times. For example, white light LEDs could be provided, green light LEDs, blue light LEDs and/or the like. The different colour LEDs and/or illumination means can provide mood lighting in the locality if required.

In one example, a user may be able to select and/or control using a control means or device any or any combination of the colour of light being emitted from the illumination means and/or LEDs at any particular time, at two or more different times, an illumination sequence of the illumination means, a time period or point of illumination of the illumination means, how many of the illumination means are illuminated, the brightness of the illumination means and/or the like.

In one example, DMX control means or device (digital multiplex - a standard for digital communication networks used to control lighting) is provided with or associated with the illumination means and/or LEDs to allow automated and/or user control of the illumination means.

The illumination means of the present invention can provide the main or sole lighting for the locality in which the apparatus is located and/or the illumination means can provide emergency lighting for the locality in which the apparatus is located. The emergency lighting could be used to help a person escape and/or safely exit the locality in which the apparatus is provided during an emergency situation.

Preferably power supply means or a power supply are provided in, connectable to and/or associated with the apparatus to power the illumination means and/or the functional component in use. The power supply means could also be used to power one or more other electrical components provided with, connected to or associated with the apparatus if required.

In one example, the illumination means are illuminated in a first colour, first combination of colours and/or first sequence of illumination when being supplied with power from a first power supply means or in a first power supply condition, and the illumination means are illuminated in at least a second colour, second combination of colours and/or second sequence of illumination when being supplied with power from a second power supply means or in a second power supply condition, the first power supply means or condition being different to the at least second power supply means or condition.

For example, white LEDs or white light could be emitted light from the apparatus when the apparatus is being powered by a mains power supply. Green LEDS or any given colour LEDs or light could be emitted from the apparatus when the apparatus is being powered by a battery backup power supply in the event of failure of the mains power supply. The LEDs and/or illumination means being powered could be the same LEDs and/or illumination means in both the first and second power supply conditions, or different LEDs and/or illumination means could be powered in the first and second power supply conditions. If different LEDs are powered in the first and second power supply conditions, the different LEDs are typically provided on the same apparatus.

Preferably if the second power supply means or condition is moved back to the first power supply means or condition, the illumination means, colour of illumination, combination of colours and/or sequence of illumination is moved from the second condition back to the first condition.

For example, if a mains power supply is reinstated after being cut off, the illumination means and/or LEDs could return from a second illumination condition, such as an emergency lighting condition, to a first illumination condition, such as a main lighting condition.

In one example, reflector means or one or more reflectors are provided on or associated with the illumination means and/or apparatus to reflect light emitted from the illumination means and/or LEDs in use. The reflector means are preferably arranged in the housing of the apparatus and a front surface of the reflector can face outwardly towards a front surface of the housing.

The illumination means and/or one or more LEDs can protrude outwardly of the first aperture or first set of apertures or can be recessed relative to an opening of the first aperture or first set of apertures as required.

In one example, the illumination means and/or LEDs are provided on or associated with a printed circuit board (PCB). Preferably the printed circuit board is provided behind or adjacent a rear surface of the housing.

Preferably the sleeve member or recess portion associated with the second aperture protrudes from a rear surface of the housing. Preferably a flange portion is provided between, and preferably extends outwardly between the outer surface of the sleeve member or recess portion and a peripheral edge of the rear surface of the housing.

Preferably the illumination means, LEDs, PCB and/or the like are provided on or associated with the flange portion of the housing.

Cover means can be provided on or associated with the illumination means, LEDs, PCB and/or flange to cover and/or protect the same in use.

Preferably the first opening or first set of openings are arranged adjacent a peripheral edge of a surface, and preferably a front surface, of the main housing.

Preferably the at least second opening is located centrally or substantially centrally of the surface, and preferably front surface, of the main housing.

In one example, electrical transforming means or an electrical transformer is provided on or associated with the apparatus to allow the voltage used to power the illumination means and/or LEDs to be stepped up and/or stepped down as required.

Preferably the electrical transforming means are low voltage transforming means and allow the voltage being supplied to the apparatus to be stepped down. For example, the low voltage transforming means can step the voltage down from 110V or 240V to 12V or 24V. The provision of the low voltage transforming means increases the safety of the apparatus when water sprinkler and/or water mist heads are the functional component for use with the apparatus.

In one example, power supply means are provided on or associated with the apparatus. The power supply means can be any or any combination of a mains power supply, electrical generator power supply means, water generator power supply means, battery powered supply means, rechargeable battery supply means and/or the like. Thus the apparatus can include a connection for the power supply or can include the power supply itself in the apparatus.

In one example, the PCB is connected to the power supply via an electrical cable or lead. At one end of the electrical cable a male inline connector or connection means can be provided that mates with a female inline connector or connection means that is connectable to the electrical cable connected to the power supply means.

In one embodiment a secondary male connector block or connection means is mountable to the PCB to allow further lighting, LED or illumination means PCBs to be connected to the apparatus.

In one example, the battery power supply means is in the form of an emergency backup battery power supply and is activated when detection of another power supply, such as for example a mains power supply, has failed. Thus, in the event of a fire, if the mains power supply is switched off and/or damaged, the illumination means can still receive power from the battery power supply means, thereby maintaining illumination if required.

In one example, when power is being supplied by the battery power supply, this activates a change in condition of the LEDs or illumination means, such as for example, changing the degree or brightness of light being emitted, changing the colour and/or colour combination/sequence of the light being emitted and/or the like.

In one example, the illumination means can be moved between different illumination conditions or from an "off' or non-activated condition and an "on" or activated condition automatically on a change in condition or detection of a condition associated with the functional component fitted with the apparatus. For example, the illumination means could change illumination condition on activation of a temperature activated bulb of a fire mist head fitted with the apparatus.

The different illumination conditions can be a first illumination condition and at least a second illumination condition. The different illumination conditions can include different colours of lighting, different numbers of lights being activated, different lighting sequences, different brightness of lights and/or the like.

In one example, dimming means or a dimmer module is provided on or associated with the apparatus, illumination means and/or switch means operating the illumination means to allow the degree or brightness of illumination provided by the illumination means and/or LEDs to be adjusted in use.

Preferably control for the functional component located in the apparatus in use is via the PCB of the apparatus.

In one example, communication means are provided on or associated with the apparatus to allow one or more signals associated with the illumination means and/or functional component to be communicated, transmitted and/or received, such as to and/or from a computer, phone and/or the like.

The communication means can include a transmitter and/or receiver.

The communication means could enable communication via radio frequency, infra-red, wiring and/or the like.

In one example, the intermediate housing is in the form of or can include a screw threaded retaining ring.

In one example, where the functional component is a fire mist head or sprinkler head, the head is engaged to some other structure behind the outer wall surface (i.e. behind the ceiling surface). In this case, the sprinkler head can simply protrude into the sleeve member via the end opposite to the second opening of the apparatus housing without needing engagement means to be provided with the side walls of the sleeve member.

In one example, one or more functional components can also be located adjacent the flange portion provided on the rear surface of the housing. For example, one or more functional components can have an annular body portion that locates around and adjacent the outer walls of the sleeve member or recess portion.

There is also disclosed herein a method of using modular illumination apparatus, said modular illumination apparatus including a housing, a first opening or first set of openings defined in the housing for the location of illumination means or for emitting light from illumination means therethrough in use, and at least a second opening defined in a surface of the housing, said method including the step of locating at least one functional component in said second opening, and wherein said housing includes two or more electrical connection means or points provided in or associated with said second opening, each or one or more of the electrical connection means or points allowing electrical connection, if required, with a different functional component or components fitted in the second opening, thereby allowing the functional component or components located in the second opening to be interchangeable.

There is further disclosed herein modular illumination apparatus, said modular illumination apparatus including a housing, a first opening or first set of openings defined in the housing for the location of illumination means or for emitting light from said illumination means therethrough in use, and at least a second opening defined in a surface of the housing for the location of one of a number of possible functional components in use, and wherein said housing includes two or more electrical connection means or points provided in or associated with said second opening, each of the two or more electrical connection means or points provided a different distance from the surface defining said second opening and/or being a different size and/or shape for providing an electrical connection with one of at least two different possible functional components in use.

There is further disclosed herein a method of using modular illumination apparatus.

There is further disclosed herein an illumination and fire mist head apparatus; an illumination and fire sprinkler head apparatus; an illumination and speaker apparatus; an illumination and camera apparatus; an illumination and carbon monoxide sensing apparatus; and illumination and smoke detection apparatus and/or the like.

Embodiments of the present invention will now be described with reference to the accompanying figures, wherein:
Figure 1 is an exploded view of modular illumination apparatus;
Figures 2a and 2b show a top plan view and a perspective view of the intermediate housing shown in Figure 1 respectively;
Figures 3a and 3b shown a cross sectional exploded view and a cross sectional assembled view of the modular illumination apparatus in Figure 1 respectively;
Figure 4 shows a partial rear perspective view of the assembled modular illumination apparatus in Figure 1;
Figure 5 shows a top plan view of the modular illumination apparatus with four possible functional components shown;
Figure 6 shows a housing cover and a second aperture cover for the housing;
Figure 7 shows a rear view of the main housing of the illumination apparatus;
Figures 8a-8c show a side view, a perspective view and an end view of a water mist dispensing head respectively according to one example of a functional component that can be used with the illumination apparatus;
Figure 9 shows a schematic view of a modular illumination apparatus;
Figure 10 shows a schematic view of another modular illumination apparatus;

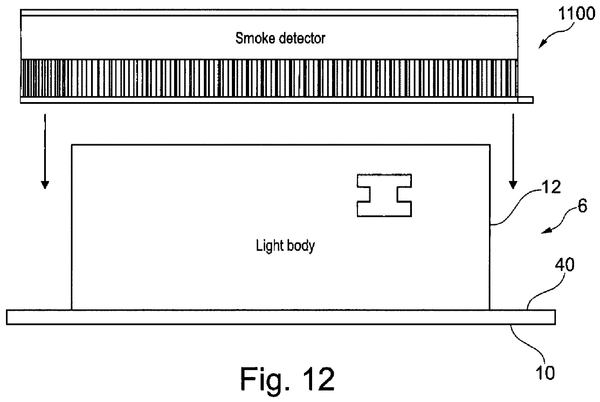

Figures 11a-11c show an exploded perspective view, an exploded side view and an assembled view of a functional component in the form of an annular smoke detection ring respectively; and Figure 12 shows how the smoke detection ring in Figures 11a-11c can be used with the modular illumination apparatus.

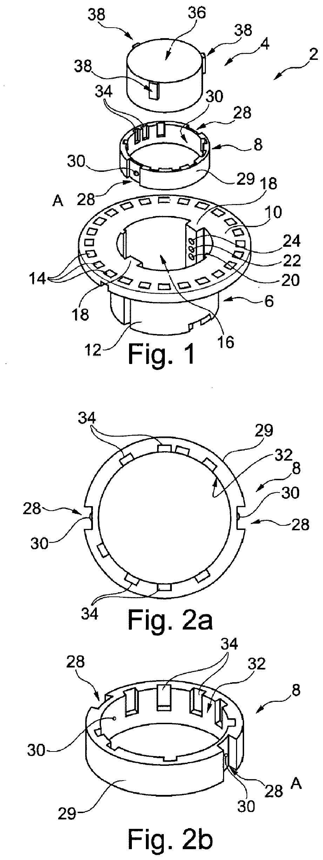

Referring to figures 1-7, there is illustrated modular illumination apparatus 2 according to an embodiment of the present invention providing illumination in combination with at least one further functional component 4. In the illustrated example, the functional component 4 is in the form of a smoke detector.

The illumination apparatus 2 comprises a main housing 6, an intermediate housing 8 which locates in main housing 6 when assembled, and smoke detector 4 which locates in the intermediate housing 8 when assembled. In the illustrated example, the illumination apparatus is designed for location on ceiling of a room in a building. However, it will be appreciated that the illumination apparatus can be used in any suitable locality and can be mounted on any suitable surface, such as a wall, floor, ceiling and/or the like.

Main housing 6 comprises a front surface 10 which is visible to a user from a ceiling (in this embodiment). A hollow sleeve member 12 protrudes rearwardly from the front surface. In use, the sleeve member 12 is typically located in an aperture or recess in the ceiling and is not visible to a user in the room in which the apparatus is fitted.

In the illustrated embodiment the front surface 10 is circular in shape and the sleeve member 12 is cylindrical or substantially cylindrical. However, this shape is not essential to the working of the present invention and any suitable shape, design and/or dimensioned housing can be provided.

A first set of apertures 14 are defined in front surface 10. The apertures 14 are arranged a spaced distance apart adjacent a peripheral edge of the front surface. As will be explained in more detail below, the apertures 14 are arranged to allow illumination means in the form of a plurality of LEDs to emit light through said apertures when operational and be visible when the front surface 10 is viewed by a user in use.

A second aperture 16 is provided centrally of front surface 10 and provides an opening to a first end of sleeve member 12. The second aperture is of such shape and size to receive a functional component in use, such as the smoke detector. The second aperture in the illustrated embodiment is circular or substantially circular but could be any shape as required.

Location means in the form of two inwardly protruding rib members 18 are provided to allow intermediate housing 8 to locate therewith in use. The rib members 18 are provided in opposing positions and are a spaced distance apart. However, any number of location means/rib members could be provided and could be distributed in any suitable arrangement on the inner surface of sleeve member 12.

Three electrical connection sockets 20, 22, 24 are provided in a spaced apart arrangement along the length of each of the rib members 18. The electrical connection sockets 20, 22, 24 on one rib member 18 are aligned and opposite corresponding electrical connection sockets 20, 22, 24 provided on the opposite rib member 18. Each electrical connection socket is a different distance from aperture 16, thereby providing a unique electrical connection position for different functional components that could be located with the apparatus in use. This allows the apparatus of the present invention to be modular in form.

Sleeve member has a central longitudinal axis 'Y' between first end 16 and an opposite second end 26. The electrical connection sockets are arranged in a spaced apart manner along an axis parallel to axis 'Y'.

In the illustrated embodiment each electrical connection socket 20, 22, 24 is specific to a different functional component that can be fitted with the housing 6. To this end, each electrical connection socket has its own unique shape and/or dimensions, as well as spatial position within the sleeve member. This allows each functional component to have its own unique electrical connection position within the housing. The same housing can therefore be used for fitting different functional components in combination with the lighting functional component, thereby making the illumination housing modular or universal in form. This significantly reduces the cost of producing and fitting the illumination apparatus. It also results in a single housing being fitted for use with different functional components.

It will be appreciated that each electrical connection socket could be arranged, shaped and/or dimensioned to fit more than one possible functional component. For example, functional components in the form of a carbon monoxide sensor or the smoke detector 4 could locate with electrical connection socket 20, functional components in the form of a camera or speaker could locate with electrical connection socket 22, and functional component in the form of a fire mist head could locate with electrical connection socket 24.

The functional component 4 can be located directly with the sleeve member 12 but in the illustrated embodiment an intermediate housing 8 is provided. The functional component 4 locates within the intermediate housing 8 and the intermediate housing 8 locates within the cavity of the sleeve member 12.

The outer surface of intermediate housing 8 is complementary or substantially complementary to the interior surface of sleeve member 12 to allow a snug fit to be formed between the intermediate housing 8 and the sleeve member when assembled together. Thus, in the illustrated example, intermediate housing 8 is cylindrical or substantially cylindrical.

Intermediate housing 8 is in the form of a hollow sleeve member and has a central longitudinal axis which is co-axial with axis 'Y' of the sleeve member 12 when assembled therewith.

Location means in the form of recesses 28 are provided on opposing outer surfaces 29 of intermediate housing 8. The recesses 28 are complementary or substantially complementary in shape to the rib members 18 provided on the inner surface of sleeve member 12 to allow the same to engage together when assembled in use. In the illustrated embodiment, the recesses 28 are provided along the entire length of the intermediate housing parallel to the longitudinal axis. The rib members 18 are also provided along the entire length of the sleeve member 12 parallel to the longitudinal axis 'Y'. However, the recesses 28 and rib members 18 could be provided on part of the lengths of their respective bodies only if required.

Electrical connection means in the form of an electrical pin 30 is provided in each of the recesses 28. The electrical pin 30 allows electrical current to flow from inner surface 32 to outer surface 29 of intermediate housing 8 in use.

The electrical pins 30 are resiliently biased outwardly of outer surface 29 of intermediate housing 8 via a spring or spring mechanism (not shown). This allows intermediate housing 8 to be inserted through second aperture 16 of sleeve member 12, with the rib members 18 of the sleeve member 12 aligned with the recesses 28 of the intermediate housing 8, and automatically locate in the appropriately sized and shaped electrical connection socket 20, 22 or 24 on the rib members 18. The different distances the electrical connection socket are placed from the second aperture 16 also allow different sized functional components to be fitted with the same.

Different intermediate housings 8 can be provided for use with the illumination apparatus having different shaped and/or dimensioned electrical pins 30. Each intermediate housing and electrical pin can correspond to a unique electrical connection position within the sleeve member 12 of main housing 6.

The inner surface 32 of intermediate housing 8 has a plurality of further location means in the form of recesses 34 defined therein. The recesses 34 are typically provided a pre-determined spaced distance apart around the inner surface. A longitudinal axis of each recess 34 is typically provided parallel or substantially parallel to the longitudinal axis of the intermediate housing 8.

The recesses 34 are arranged in different groups, and the different groups of recesses have their own unique spaced apart pre-determined positions around the inner surface of the intermediate housing. Each different group of recesses 34 corresponds to a different functional component that can locate with the intermediate housing in use.

Visual indication means can be used to allow a user to distinguish between different groups of recesses 34 on the inner surface of the intermediate housing 8. For example, the visual indication means can include a unique colour marking that can be provided for all the recesses 34 in a particular group.

Functional component 4 in the illustrated embodiment is in the form of a smoke detector having a body portion 36. The outer shape of body portion 36 is of complementary or substantially complementary shape to the inner surface of intermediate housing 8, thereby allowing a snug fit to be formed when the functional component 4 is engaged with the intermediate housing 8 in use. In this example, the outer shape of the body portion 36 is cylindrical or substantially cylindrical. Further location means in the form of rib members 38 protrude outwardly from body portion 36 of functional component 4. The rib members 38 are complementary or substantially complementary in terms of position, shape and/or size to a particular group of recesses 34 provided on the inner surface 32 of intermediate housing 8 unique for that particular functional component 4. Thus, each functional component 4 has its own unique engagement position within intermediate housing 8.

In the illustrated example, a longitudinal axis of the rib members 38 is provided parallel to substantially parallel to the longitudinal axis of the intermediate housing and the functional component.

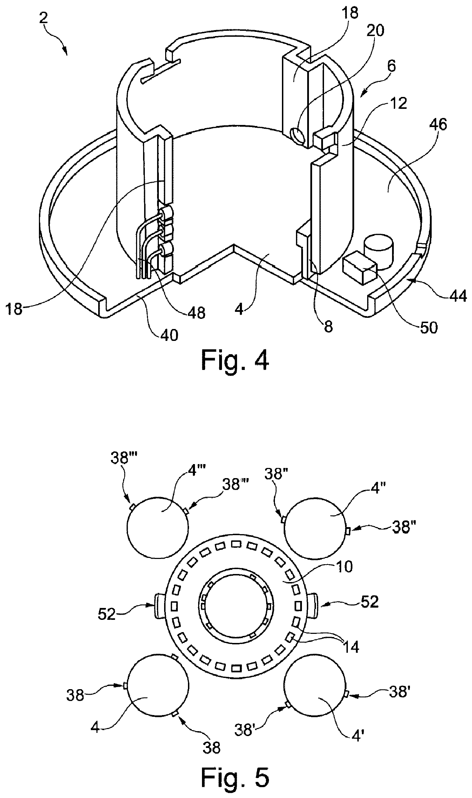

Referring to figure 5, a number of different functional components 4, 4', 4" and 4'" are shown, each functional component having a unique set of outwardly protruding rib members 38, 38', 38" and 38'" respectively. Each unique set of outwardly protruding rib members locates with its own corresponding/complementary arranged recess group provided on intermediate housing 8. This allows most of the features of the intermediate housing 8 to be universal, with the only exception being the position of the electrical connection pin 28, which is typically unique to each intermediate housing.

With a particular functional component engaged its unique position within the intermediate housing, an electrical connection point on the functional component is aligned with electrical pin 30, thereby allow electrical power flowing through the electrical pin 30 in use to pass into the functional component and power the same.

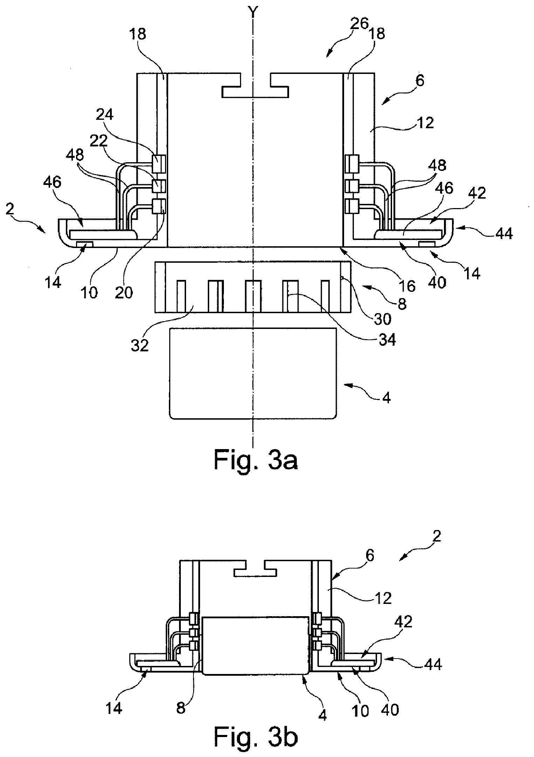

Sleeve member 12 protrudes outwardly from a rear surface 40 of main housing 6. It can be seen from the figures that the surface area of front face 10 is much larger than the surface area of the second aperture 16. This creates a flange portion 42 on the rear side of main housing 6 provided between the outer surface of sleeve member 12 and peripheral edge 44 of front surface 10, as shown in figure 3a. This flange portion 42 is for the location of one or more printed circuit boards (PCB) 46. The LEDs providing the primary lighting function of the illumination apparatus are located on the printed circuit board 46 and are arranged such that light emitted from the LEDs passes through apertures 14 defined between front face 10 and rear face 40.

Electrical connections 48 are provided between the PCB 46 and the electrical connection sockets 20, 22, 24 to allow power to be transmitted from the PCB to the component function engaged with an electrical connection socket in use. The PCB 46 is connected to a power source (not shown), such as a mains power supply, generator, battery, rechargeable battery and/or the like.

An electronic driver 50 is provided on the PCB for controlling the illumination and/or one or more illumination sequences of the LEDs in use.

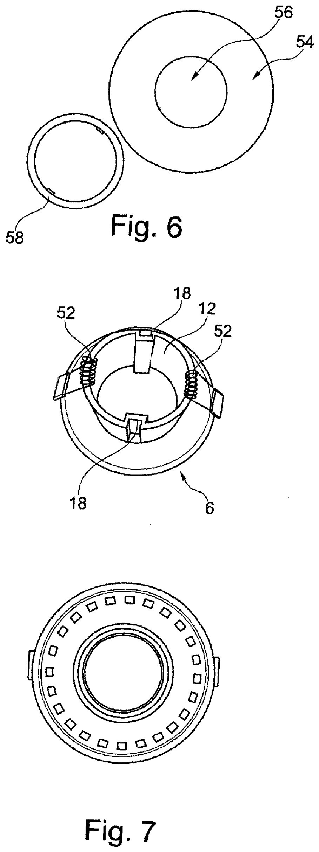

Engagement means in the form of two sprung clips 52 can be associated with the sleeve member 12 of the main housing 6 to allow the illumination apparatus 2 to be engaged in an aperture in a ceiling or wall in use, as shown in figure 7. A cover member 54 can be provided over the rear surface of flange portion 42 to enclose the PCB 46 and driver 50 in use.

Cover means in the form of a lens cover 54 can be provided for location over the front surface 10 of the main housing 6, thereby allowing the light emitted through apertures 14 to be focused as required. An aperture 56 is defined in lens cover 54 to allow the functional component 4 to be located therethrough in use. With the functional component 4 in position within housing 6, a further cover 58 can be provided to cover second aperture 16 and thus the functional component 4. Further cover 58 can lens cover 54 can engage with the main housing 6 using any suitable engagement means, such as friction fit, inter-engaging members, one or more tabs, resilient biasing means, sprung material, one or more clips, screws, and/or the like

It will be appreciated that a front surface 60 of functional component 4 can be flush, substantially flush or recessed with respect to front surface 10 of main housing 6 when assembled.

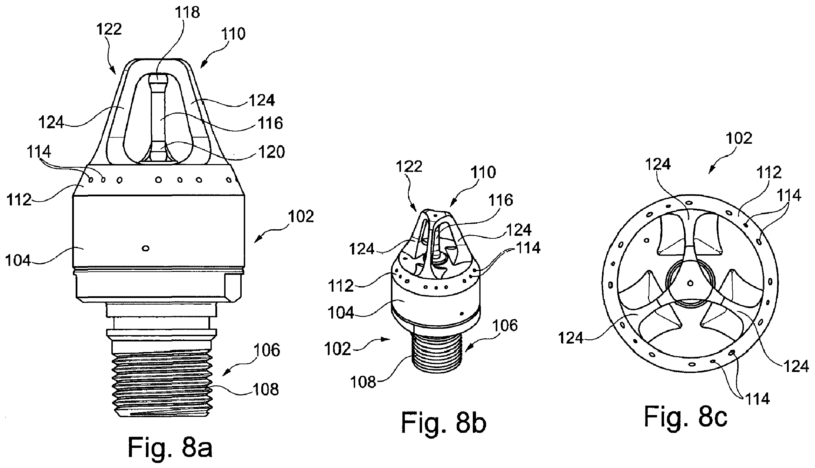

Figures 8a-8c illustrated one example of a functional component that can be located in the second aperture 16 of the illumination apparatus 2 in one embodiment in the form of a water mist dispensing head 102.

The dispensing head 102 includes a body portion 104 having a first end 106 provided with attachment means in the form of a screw threaded connector 108. The screw threaded connector 108 allows the head 102 to engage with complementary engagement means provided on an inner surface of intermediate housing 8.

The body portion 104 has a tapered neck portion 112 towards a second end 110. A plurality of water outlet apertures 114 are defined around the neck portion 112 and arranged to produce a water mist therefrom when a valve (not shown) provided internally of the body portion and associated with a water supply pipe is moved from a non-actuated position to an actuated position. The provision of the fine mist water particles provides a greater surface area of water available to absorb heat in the locality and to put out a fire, thereby allowing a fire to be put out approximately 10 times faster than water deluge fire protection systems.

Temperature detection means in the form of a bulb 116 is arranged at end 110 and supported between two support ends 118, 120 of a frame 122. A fluid is contained in bulb 116 which expands as the ambient temperature increases, thereby increasing the fluid pressure within the bulb. Once a pre-determined ambient temperature has been reached, such as for example a temperature that may be associated with a fire in the locality, the increase in fluid pressure causes the bulb to break, thereby allowing the valve contained within the body portion 104 to move from the non-actuated position to the actuated position. In the illustration, frame 122 includes three angled support members 124.

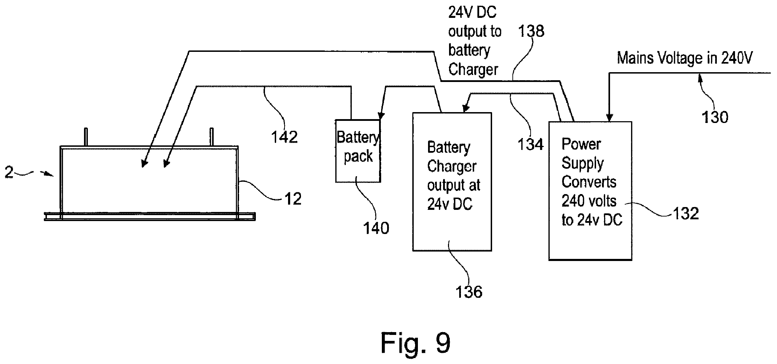

The apparatus 2 is typically powered by a 240V mains power supply, shown by reference 130 in figure 9. Transforming means 132 are associated with the apparatus 2 to step down the incoming voltage from 240V to 24V DC. This 24V DC supply is then split into two feeds; a first feed 134 sent to a battery charger 136 which trickle charges a battery pack 140, and a second feed 138 sent directly to housing 6 to power the lights or LEDs. Switching control means in the form of a dimming switch (not shown) are typically associated with the light housing so a user can adjust the voltage being supplied to the lights or LEDs, thereby allowing a user to select a required level of brightness for the lights or LEDs. In the event the mains power supply 130 fails, as may happen in the event of a fire, the battery pack 140, which is also connected to the lights or LEDs in the light housing 6 via voltage path 142, takes over powering the lights or LEDs from the mains power supply. The light generated by the lights or LEDs is typically moved from a white light to a green light in this condition to inform a user that the lighting is now being run from a battery pack. The battery pack can typically provide illumination of the lights or LEDs for up to 15 hours, or until such time as the mains power supply is restored. On restoration of mains power, the LEDs typically return to emitting white light.

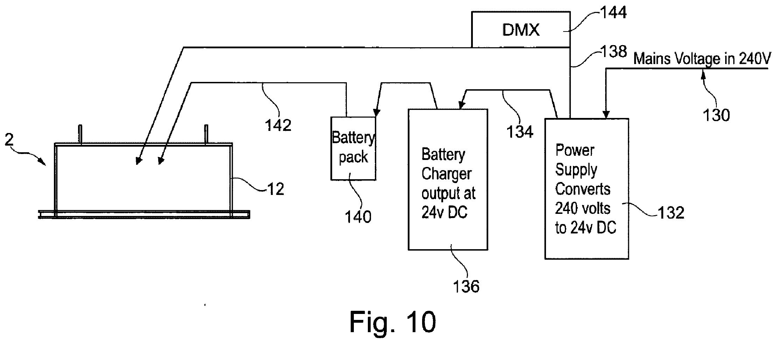

A similar arrangement is shown in figure 10 but in this embodiment a DMX wall mounted or flange mounted controller 144 is provided in voltage feed path 138 to allow the colour and/or brightness of the LEDs to be selected and/or varied as required by a user.

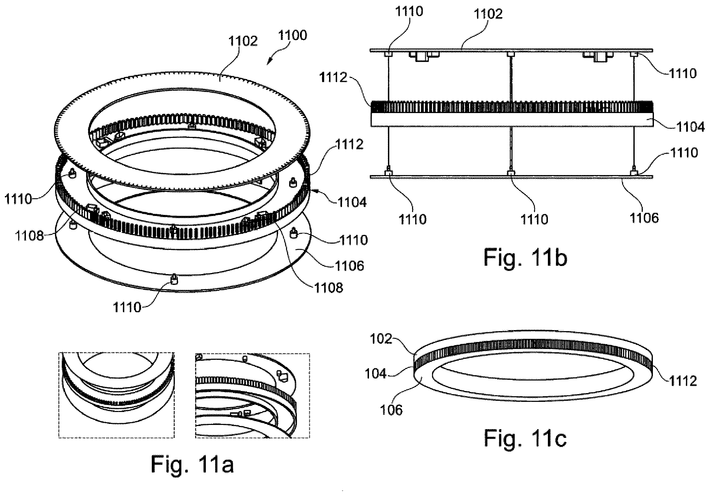

Referring to figures 11a-11d, there is illustrated a functional component in the form of an annular smoke detection unit 1100 that can be fitted to the exterior of the sleeve member 12 on apparatus 2 in one embodiment.

In the illustration, the annular unit 1100 includes three separate annular components; an upper annular component 1102, an intermediate annular component 1104, and a lower annular component 1106. The intermediate component 1104 typically includes the smoke sensors 1108 and the electrical circuitry associated with the same. The upper and lower components 1102, 1106 typically enclose the unit and hold the unit together.

Connection means comprising inter-engaging members in the form of male and female connectors 1110 are provided to allow the three components to be joined together.

The intermediate component 1104 has a plurality of fin members 1112 arranged circumferentially on an exterior edge to allow smoke to be drawn into the unit 1100. The fin members 1112 in this example are provided around the entire circumference. A plurality of smoke sensors 1108 are arranged at spaced apart intervals on the intermediate component 1104. The annular smoke detection unit 1100 is typically located around the outer surface of sleeve member 12 of the apparatus 2.

Embodiments of the present invention have been described with particular reference to the examples illustrated. However, it will be appreciated that variations and modifications may be made to the examples described within the scope of the appending claims.

The following numbered clauses correspond to the claims of European patent application no. 15821153.2 as filed. The claims of the present application as filed, which is divided from European patent application no. 15821153.2, can be found on the subsequent pages of the specification which begin with the heading "CLAIMS".

### Clauses

1. Modular illumination apparatus, said modular illumination apparatus including a housing, a first opening or first set of openings defined in the housing for the location of illumination means or for emitting light from illumination means therethrough in use, and at least a second opening defined in a surface of the housing for the location of at least one of a number of possible functional components in use, and wherein said housing includes two or more electrical connection means or points provided in or associated with said second opening, each or one or more of the electrical connection means or points allowing electrical connection, if required, with a different functional component or components in use, thereby allowing the functional component or components located in the second opening to be interchangeable.
2. Modular illumination apparatus according to clause 1 wherein each or at least one of the two or more electrical connection means or points are provided a different distance from the surface defining said second opening, are provided in a different spatial position relative to a particular point on the surface defining said second opening and/or are a different size and/or shape, thereby providing a unique or different electrical connection or electrical connection position for at least one of the number of different possible functional components in use.
3. Modular illumination apparatus according to clause 1 wherein the one or more functional components that can be used with the apparatus include any or any combination of a fire sprinkler means or mechanism, a fire mist means or mechanism, speaker means or mechanism, smoke detection means or mechanism, further illumination means or mechanism, or a camera means or mechanism.
4. Modular illumination apparatus according to clause 1 wherein the one or more functional components that can be located in or with the at least second opening in use can be an electrically powered functional component, an electronic functional component and/or can be a non-electrically powered functional component.
5. Modular illumination apparatus according to clause 1 wherein only a single functional component is located or locatable in or with the second aperture of the apparatus at any one time.
6. Modular illumination apparatus according to clause 1 wherein the two or more electrical connection means or points are arranged in a spaced apart manner along a surface of the housing that is perpendicular, substantially perpendicular and/or transverse to the face or surface in which at least the second opening is defined.
7. Modular illumination apparatus according to clause 1 wherein the housing includes a sleeve member or a recess portion and the second opening is defined at a first end of the sleeve member or recess aperture.
8. Modular illumination apparatus according to clause 7 wherein the sleeve member or recess portion protrudes rearwardly or outwardly from the surface of the housing in which the first and/or second openings are defined.
9. Modular illumination apparatus according to clause 8 wherein the two or more electrical connection means or points are arranged along or around a side wall of the sleeve member or recess portion.
10. Modular illumination apparatus according to clause 1 wherein at least one of the two or more spaced apart electrical connection means or points defined in the housing are in the form of electrical sockets.
11. Modular illumination apparatus according to clause 7 wherein the sleeve member or recess portion with location means or one or more location members to allow a functional component to locate with the same in use.
12. Modular illumination apparatus according to clause 11 where the functional component, or at least one intermediate housing with which the functional component locates in use, is provided with complementary or substantially complementary location means or one or more location members to allow location and/or engagement with the location means or members on the sleeve member or recess portion.
13. Modular illumination apparatus according to clause 11 or 12 wherein the one or more location means or members include any or any combination of one or more protrusion members and/or recesses.
14. Modular illumination apparatus according to clause 11 wherein the two or more electrical connection means or points are provided on or associated with the location means or one or more location members.
15. Modular illumination apparatus according to clause 1 wherein one or more electrical connection means or points are provided on the functional component(s) and/or at least one intermediate housing with which the functional component locates with in use, and said one or more electrical connection means or points are complementary or substantially complementary in form to at least one of the two or more electrical connection means or points on the main housing.
16. Modular illumination apparatus according to clause 15 wherein the one or more electrical connection means or points on the functional component(s) and/or at least one intermediate housing includes one or more electrical pins.
17. Modular illumination apparatus according to clause 15 wherein the one or more electrical connection means or points provided on the functional component(s) and/or at least one intermediate housing have resilient biasing means associated with the same to bias the electrical connection means or points outwardly of the intermediate housing and/or functional component body.
18. Modular illumination apparatus according to clause 1 wherein an intermediate housing is provided with which a functional component can locate with in use, the intermediate housing including one or more location means or members that can locate and/or engage with one or more complementary or substantially complementary location means or members provided on the different functional component.
19. Modular illumination apparatus according to clause 18 wherein two or more different groups or sets of location means or members are provided on the intermediate housing, each group or set corresponding to a different functional component that can be located with the same in use.
20. Modular illumination apparatus according to clause 19 wherein visual indication means are provided on or associated with the two or more different groups or sets of location means or members.
21. Modular illumination apparatus according to clause 19 wherein the two or more different groups or sets of location means or members provided on the intermediate housing have different dimensions, shape and/or design.
22. Modular illumination apparatus according to clause 1 wherein engagement means are provided on or associated with the main housing of the apparatus to allow the apparatus to be fitted to or in a wall surface in use.
23. Modular illumination apparatus according to clause 1 wherein the illumination means has any or any combination of the following: rated at IP65, provides a main source or sole source of illumination in a locality in which the apparatus is fitted, provides emergency lighting in a locality in which the apparatus is fitted, includes one or more light emitting diodes (LEDs), is arranged to provide different coloured lighting, provides two or more different possible light sequences, allows light to be emitted for different time periods or at different times or allows the brightness of the light to be adjusted.
24. Modular illumination apparatus according to clause 1 wherein digital multiplex (DMX) control means are provided with or associated with the illumination means and/or one or more LEDs forming part of the illumination means to allow automated and/or user control of the same.
25. Modular illumination apparatus according to clause 1 wherein power supply means or a power supply is provided in, connectable to and/or associated with the apparatus to power the illumination means and/or the functional component.
26. Modular illumination apparatus according to clause 1 wherein one or more reflectors are provided on or associated with the illumination means and/or apparatus to reflect light emitted from the illumination means in use.
27. Modular illumination apparatus according to clause 8 wherein a flange portion is provided between an outer surface of the sleeve member or recess portion and a peripheral edge of a rear surface of the housing.
28. Modular illumination apparatus according to clause 27 wherein the illumination means, one or more LEDs, printed circuit board associated with the LEDs and/or control means for the illumination means are provided on or associated with the flange portion of the housing when assembled in use.
29. Modular illumination apparatus according to clause 27 wherein cover means are provided on or associated with the flange portion to cover one or more components that may be located on said flange portion in use.
30. Modular illumination apparatus according to clause 1 wherein communication means are provided on or associated with the apparatus to allow one or more signals associated with the illumination means and/or functional component to be communicated, transmitted and/or received in use.
31. A method of using modular illumination apparatus, said modular illumination apparatus including a housing, a first opening or first set of openings defined in the housing for the location of illumination means or for emitting light from illumination means therethrough in use, and at least a second opening defined in a surface of the housing, said method including the step of locating at least one functional component in said second opening, and wherein said housing includes two or more electrical connection means or points provided in or associated with said second opening, each or one or more of the electrical connection means or points allowing electrical connection, if required, with a different functional component or components fitted in the second opening, thereby allowing the functional component or components located in the second opening to be interchangeable.

## Claims

1. A modular illumination apparatus, comprising:
a housing;
at last one first opening defined in the housing for receiving an illumination means or for emitting light from an illumination means therethrough; and
at least one second opening defined in a surface of the housing for receiving at least one of a number of possible functional components;
wherein the interior of the housing is configured to be capable of receiving different functional components, thereby allowing the functional component or components located in the second opening to be interchangeable.

2. The apparatus of claim 1, wherein the housing includes two or more electrical connection means or points provided in or associated with the second opening, each or one or more of the electrical connection means or points being configured to allow electrical connection, if required, with a different functional component or components.

3. The apparatus of claim 2, wherein each or at least one of the two or more electrical connection means or points are provided a different distance from the surface defining the second opening, are provided in a different spatial position relative to a particular point on the surface defining said second opening, and/or are a different size and/or shape, thereby providing a unique or different electrical connection or electrical connection position for at least one of the number of different possible functional components in use.

4. The apparatus of claim 2 or 3, wherein the two or more electrical connection means or points are arranged in a spaced apart manner along a surface of the housing that is perpendicular, substantially perpendicular, and/or transverse to the face or surface in which at least the second opening is defined.

5. The apparatus of any preceding claim, wherein the one or more functional components that can be used with the apparatus include any or any combination of a fire sprinkler means or mechanism, a fire mist means or mechanism, speaker means or mechanism, smoke detection means or mechanism, further illumination means or mechanism, or a camera means or mechanism.

6. The apparatus of any preceding claim, wherein the housing includes a sleeve member or a recess portion, and the second opening is defined at a first end of the sleeve member or recess portion.

7. The apparatus of claim 6, wherein the sleeve member or recess portion is provided with location means or one or more location members to allow a functional component to locate with the same in use.

8. The apparatus of claim 7, where the functional component, or at least one intermediate housing with which the functional component locates in use, is provided with complementary or substantially complementary location means or one or more location members to allow location and/or engagement with the location means or members on the sleeve member or recess portion.

9. The apparatus of any preceding claim, further comprising engagement means provided on or associated with the housing and configured to allow the apparatus to be fitted to or in a wall surface.

10. The apparatus of any preceding claim, wherein the illumination means has any or any combination of the following: rated at IP65, provides a main source or sole source of illumination in a locality in which the apparatus is fitted, provides emergency lighting in a locality in which the apparatus is fitted, includes one or more light emitting diodes, is arranged to provide different coloured lighting, provides two or more different possible light sequences, allows light to be emitted for different time periods or at different times or allows the brightness of the light to be adjusted.

11. The apparatus of any preceding claim, further comprising digital multiplex control means configured to allow a user to control the illumination means and/or one or more light emitting diodes forming part of the illumination means.

12. The apparatus of any preceding claim, wherein power supply means or a power supply is provided in, connectable to, and/or associated with the apparatus to power the illumination means and/or the functional component.

13. The apparatus of any preceding claim, wherein one or more reflectors are provided on or associated with the illumination means and/or apparatus to reflect light emitted from the illumination means.
